(19) Europäisches Patentamt
European Patent Office
Office européen des brevets

(11) **EP 1 930 131 A2**

(12) **EUROPEAN PATENT APPLICATION**

(43) Date of publication:
**11.06.2008 Bulletin 2008/24**

(51) Int Cl.:
***B25J 9/16*** *(2006.01)*

(21) Application number: **07023557.7**

(22) Date of filing: **05.12.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (72) Inventors:<br>• **Sato, Takashi**<br>  **Minamitsuru-gun**<br>  **Yamanashi 401-0597 (JP)**<br>• **Iwatake, Takahiro**<br>  **Minamitsuru-gun**<br>  **Yamanashi 401-0597 (JP)** |
| (30) Priority: **07.12.2006 JP 2006330900** | (74) Representative: **Thum, Bernhard** |
| (71) Applicant: **FANUC LTD**<br>**Minamitsuru-gun,**<br>**Yamanashi 401-0597 (JP)** | **Wuesthoff & Wuesthoff**<br>**Patent- und Rechtsanwälte**<br>**Schweigerstrasse 2**<br>**81541 München (DE)** |

(54) **Robot control apparatus for force control**

(57)    A robot control apparatus (10) for controlling force exerted between a working tool (52) mounted at the forward end of a robot arm (50a) and a workpiece (60) is disclosed. The apparatus includes a force measuring unit (51) for acquiring the force data required for the control operation, a calculating unit (13) for calculating the force exerted by gravity on the force measuring unit and the dynamic terms generated by the motion of the robot arm, of all the forces exerted on the force measuring unit from the working tool, a compensation unit (14) for compensating the force measured by the force measuring unit using the force exerted by gravity and the dynamic terms calculated by the calculating unit, and a command adjusting unit (12) for adjusting the operation command for the robot arm in accordance with the force exerted on the force measuring unit by the dynamic terms and gravity in the case where each of the dynamic terms is larger than a predetermined threshold value. As a result, the workpiece can be accurately machined even in the case where the forward end portion of the robot arm is changed a comparatively great degree in the direction of movement thereof.

## Fig.3

**Description**

BACKGROUND OF THE INVENTION

1. Field of the Invention

This invention relates to a robot control apparatus, or in particular, to a robot control apparatus for controlling machining such as deburring, grinding and polishing using a robot.

2. Description of the Related Art

In order to carry out machining such as deburring, polishing or grinding using a robot, a working tool mounted at the forward end of a robot arm is moved while being pushed against a workpiece with an appropriate amount of force. For a similar purpose, a workpiece held in the hand mounted at the forward end of the robot arm may be pushed against a machine tool fixed with an appropriate amount of force while at the same time moving the hand.

In the process, a working tool or a machine tool having the compliance control mechanism may be used to make sure that a proper amount of force is exerted between the workpiece and the working tool. Also, the force exerted between the workpiece and the working tool may be estimated by using the current value of a force sensor or an actuator of a machine drive unit, and by feeding back the force, the position or the force of the working tool may be controlled.

The force detected by a force measuring means such as a force sensor includes forces other than the net force exerted between the working tool and the workpiece, e.g. external forces such as gravity applied to the end effector of the robot, and a gyro-moment. In Japanese Patent Publication No. 3412236, the force is compensated by subtracting the external forces due to gravity and gyro-moment from the force detected by the force measuring means.

Further, in the case where the direction in which the forward end portion of the robot arm moves is changed a comparatively great degree in a trace machining operation, the pushing force by the robot may be controlled incompletely and the workpiece may be machined insufficiently or excessively. In order to solve this problem, according to Japanese Patent Publication No. 3402829, the velocity at which the end effector proceeds, and a target pushing force are reduced in a predetermined range at the corners of the workpiece in accordance with a predefined program. Also, Japanese Patent Publication No. 2739764 and Japanese Unexamined Patent Publication No. 5-143146 disclose a technique of calculating the radius of curvature along the machining route and determining the relative speed and target pushing force between the robot and the workpiece in accordance with the calculated radius of curvature.

However, the force detected by the force measuring means actually includes dynamic terms such as dynamic friction force and inertia force which includes centrifugal force and Colioris force at the end effector at the forward end of the robot arm moved together with the robot arm.

Further, in the case where the direction of movement of the forward end portion of the robot arm is changed a comparatively great degree in the trace machining operation, the values of the dynamic terms also increase comparatively. Therefore, these dynamic terms are required to be taken into consideration to estimate the net force exerted between the working tool and the workpiece with higher accuracy.

The values of gravity and the dynamic terms are estimated from the posture, the operating speed and the operating acceleration of the robot or the mass of the working tool. However, since these values always contain an error, a perfect estimate is impossible. In the case where the direction in which the forward end portion of the robot arm is changed to a comparatively great degree, the dynamic terms are also increased, and therefore, the error also tends to increase. Also, the delay of the control system and the limitation of the trackability may cause a situation in which the workpiece cannot be machined as desired by the mere compensation of the dynamic terms.

These problems may be effectively overcome by the method described in Japanese Patent Publication No. 3402829 described above, in which the speed in the proceeding direction and the target pushing force are reduced. However, in Japanese Patent Publication No. 3402829, the surface profile of the workpiece is required to be known, and the area in which the speed in the proceeding direction and the pushing force are changed is required to be designated in advance.

According to Japanese Patent Publication No. 2739764 and Japanese Unexamined Patent Publication No. 5-143146, an index such as the radius of curvature is required to be calculated separately as a criterion for changing the speed in the proceeding direction or the target pushing force. Further, according to Japanese Patent Publication No. 2739764 and Japanese Unexamined Patent Publication No. 5-143146, the mass and gravity point of the end effector are varied by the working tool, the hand or the workpiece held. In the case where the radius of curvature assumes the same value such as for the operation along the same trajectory, the adjust value of the speed in the proceeding direction and the pushing force are required to be changed for each type of the workpiece or the end effector.

This invention has been achieved in view of the above described problem, and the object thereof is to provide a robot control apparatus capable of machining a workpiece with higher accuracy even in the case where the direction in which the forward end portion of the robot arm is moved is changed a comparatively great degree.

SUMMARY OF THE INVENTION

In order to achieve the object described above, according to a first aspect of the invention, there is provided a robot control apparatus for controlling the force exerted between a working tool mounted at the forward end of a robot arm and a workpiece, comprising a force measuring means for acquiring the force data required for the control operation, a calculating means for calculating the force exerted by gravity on the force measuring means and the dynamic terms generated by the motion of the robot arm, of all the forces applied from the working tool to the force measuring means, a compensating means for compensating the force measured by the measuring means, using the force exerted by gravity on the force measuring means and the dynamic terms calculated by the calculating means, and a command adjusting means for adjusting the operation command for the robot arm in accordance with the force exerted by gravity on the force measuring means and the dynamic terms in the case where each of the dynamic terms is larger than a predetermined threshold value.

According to a second aspect of the invention, there is provided a robot control apparatus for controlling the force exerted between a workpiece held by a hand mounted at the forward end of a robot arm and a fixed working tool, comprising a force measuring means for acquiring the force data required for the control operation, a calculating means for calculating the force exerted by gravity on the force measuring means and the dynamic terms generated by the motion of the robot arm, in all the forces of the force measuring means applied from the hand holding the workpiece, a compensating means for compensating the force measured by the measuring means, using the force exerted by gravity on the force measuring means and the dynamic terms calculated by the calculating means, and a command adjusting means for adjusting the operation command for the robot arm in accordance with the dynamic terms and the force exerted by gravity on the force measuring means in the case where each of the dynamic terms is greater than a predetermined threshold value.

Specifically, according to the first and second aspects, even in the trace machining operation with the direction of movement of the forward end portion changed a comparatively great degree, the weight of the end effector such as the working tool or the hand at the forward end of the robot arm and the dynamic terms such as dynamic friction force and inertia force which includes centrifugal force and Colioris force due to the motion of the robot arm, can be compensated. As a result, the error of the net force exerted between the working tool and the workpiece can be reduced to a minimum. Therefore, according to these aspects, the pushing force exerted between the working tool and the workpiece can be accurately controlled.

Further, according to the first and second aspects, the commands related to the operation of the robot arm can be adjusted without teaching the adjust points on the machining route in advance or calculating the radius of curvature of the machining route separately. Furthermore, according to the first and second aspects, the tendency of the machining operation to be insufficient or excessive can be determined from gravity and dynamic terms, and in accordance with this, the operation command can be adjusted. Also, the threshold value is preferably-determined based on the target pushing force setting, so that the same adjusting value can be used even in the case when the working tool, hand or workpiece is replaced.

According to a third aspect of the invention, there is provided a robot control apparatus of the first or second aspect, wherein the operation command for the robot arm adjusted by the command adjusting means includes a command on the force to be exerted between the working tool and the workpiece.

Specifically, according to the third aspect, the target value of the force is changed in accordance with inertia force obtained from the dynamic terms and the operating direction, thereby making it possible to machine the workpiece in the desired state.

According to a fourth aspect of the invention, there is provided a robot control apparatus of any one of the first to third aspects, wherein the operation command for the robot arm adjusted by the command adjusting means includes the speed of the robot arm in the proceeding direction.

Specifically, according to the fourth aspect, the target value of the speed in the proceeding direction is changed in accordance with inertia force obtained from the dynamic terms and the operating direction, thereby making it possible to machine the workpiece in the desired state.

According to a fifth aspect of the invention, there is provided a robot control apparatus of any one of the first to fourth aspects, wherein the operation command for the robot arm adjusted by the command adjusting means includes the target trajectory of the robot arm.

Specifically, according to the fifth aspect, the target trajectory is changed in accordance with inertia force obtained from the dynamic terms and the operating direction, thereby making it possible to machine the workpiece in the desired state.

According to a sixth aspect of the invention, there is provided a robot control apparatus of any one of the first to fifth aspects, wherein the operation command for the robot arm adjusted by the command adjusting means includes the gain of the force control operation.

Specifically, according to the sixth aspect, the workpiece can be machined in the desired state by changing the gain of the force control operation in accordance with inertia force obtained from the dynamic terms and the operating direction.

According to a seventh aspect of the invention, there is provided a robot control apparatus of any one of the first to sixth aspects, wherein the calculating means calculates the dynamic terms and gravity from the posture, the operating speed and the operating acceleration of the robot arm and the mass and gravity of the end effector mounted at the forward end of the robot arm.

According to an eighth aspect of the invention, there is provided a robot control apparatus of any one of the first to seventh aspects, wherein the force measuring means is a force sensor.

According to a ninth aspect of the invention, there is provided a robot control apparatus of any one of the first to seventh aspects, wherein the force measuring means estimates the force based on the current value of the actuator for driving the robot arm.

Specifically, according to the eighth and ninth aspects, the force can be measured by a comparatively simple method. Also, according to the ninth aspect, the force sensor is not required to be prepared separately.

According to a tenth aspect of the invention, there is provided a robot control apparatus of any one of the first to ninth aspects, wherein the force control operation of the robot control apparatus is the impedance control operation.

According to an 11th aspect of the invention, there is provided a robot control apparatus of any one of the first to ninth aspects, wherein the force control operation performed by the robot control apparatus is the damping force control operation.

The above and other objects, features and advantages of the invention will be made apparatus by the detailed description of typical embodiments of the invention taken in conjunction with the accompanying drawings.

BRIEF DESCRIPTION OF THE DRAWINGS

Fig. 1 is a perspective view of a robot controlled by a robot control apparatus according to the invention.

Fig. 2 is a function block diagram showing the robot control apparatus according to the invention.

Fig. 3 is a diagram explaining the movement of the forward end portion of the robot arm controlled by the robot control apparatus.

Fig. 4 is a perspective view of another robot controlled by the robot control apparatus according to the invention.

Fig. 5 is a diagram showing the relationship between the target speed Vd in the proceeding direction and the time t elapsed from the time point when the threshold value is exceeded.

Fig. 6 is a diagram showing the relationship between the coefficients $\alpha 1$, $\alpha 2$ and the magnitude of the component of inertia force in the pushing direction.

Fig. 7 is another diagram showing the relation between the target speed Vd in the proceeding direction and the time t elapsed from the time point when the threshold value is exceeded.

Fig. 8 is a diagram showing the relationship between the coefficient $\beta 1$ and the magnitude $|h|$ of the component of inertia force in the pushing direction.

Fig. 9 is a diagram showing the relationship between the target pushing force Fd and the time t elapsed after exceeding the threshold value.

Fig. 10 is another diagram showing the relationship between the target pushing force Fd and the time t elapsed after exceeding the threshold value.

Fig. 11 is a diagram showing the relationship between the trajectory compensation amount Tm and the time t elapsed after exceeding the threshold value.

Fig. 12 is another diagram showing the relationship between the trajectory compensation amount Tm and the magnitude lhl of the component of inertia force in the pushing direction.

Fig. 13 is a diagram showing the relationship between the force control gain Gd and the time t elapsed after exceeding the threshold value.

DETAILED DESCRIPTION

An embodiment of the invention will be explained below with reference to the accompanying drawings. In the drawings, similar component members are designated by the same reference numerals, respectively. To facilitate understanding, the scale of the drawings has been appropriately changed.

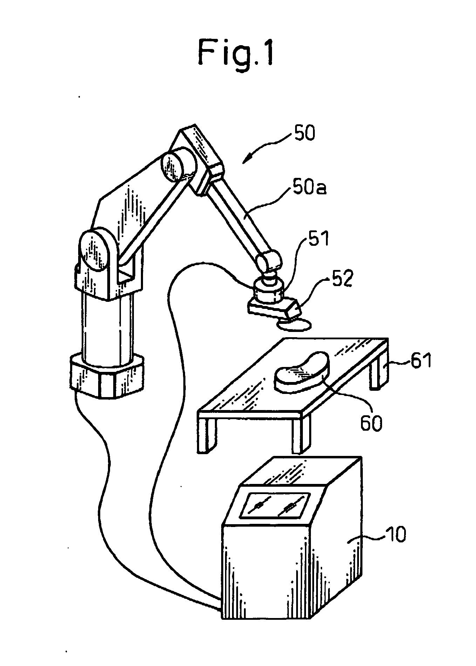

Fig. 1 is a perspective view of the robot controlled by the robot control apparatus according to this invention. The robot 50 shown in Fig. 1 is a multijoint robot equipped with 6 degrees of freedom. Robot 50 is controlled by the robot control apparatus 10. A working tool 52 is mounted at the forward end of the robot arm 50a of the robot 50. According to the embodiment shown in Fig. 1, the working tool 52 is a grinder, for example. The working tool 52 such as the grinder shown in Fig. 1 is used for grinding the workpiece 60 fixed on a work bench 61.

Further, a force sensor 51 is arranged between the forward end of the robot arm 50a and the working tool 52. The force sensor 51 measures the force with which the working tool 52 is pushed against the workpiece 60. The term "force" as used in this specification is assumed to include both the force and the moment. As shown, the force sensor 51 is connected to the robot control apparatus 10, and the force data measurement is supplied to the robot control apparatus 10. In the description that follows, the force sensor 51 may be referred to as the "force measuring means 51" as required.

Also, the force may be estimated based on the current value of an actuator (not shown) for driving the robot arm 50a without using the force sensor 51. In such a case, the means for estimating the force based on the current value corresponds to the force measuring means 51.

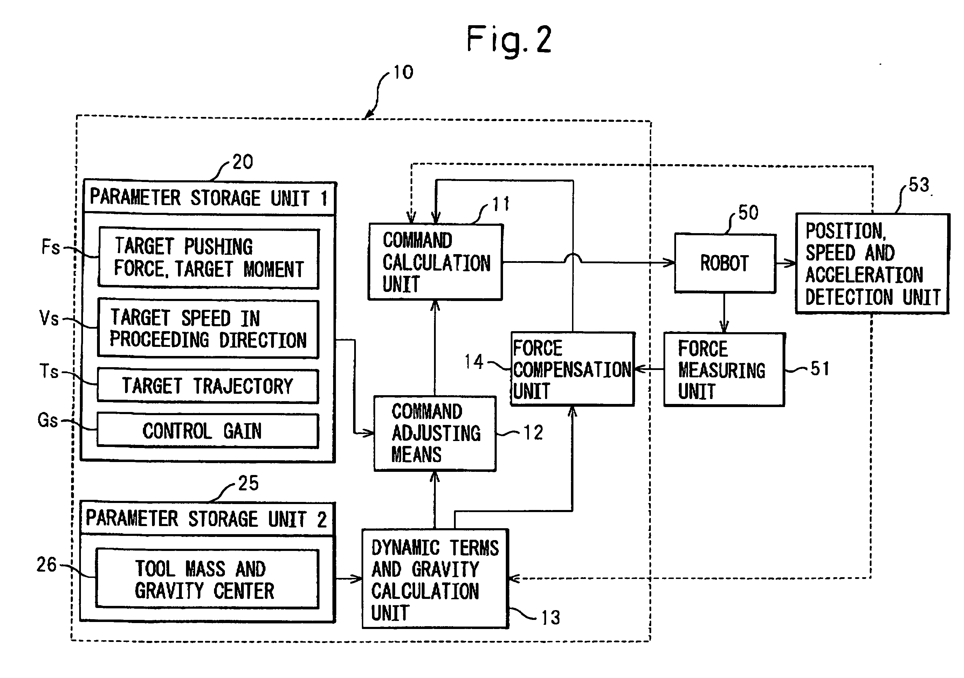

Fig. 2 is a function block diagram showing the robot control apparatus according to the invention. The robot control apparatus 10 constituting a microcomputer includes a first parameter storage unit 20 and a second parameter storage unit 25. As shown in Fig. 2, the first parameter storage unit 20 has stored therein predetermined settings including a target pushing force/target moment Fs, a target speed Vs in the proceeding direction, a target trajectory Ts and a control gain such as a force control gain Gs. The second parameter storage unit 25, on the other hand, has stored therein a mass and gravity point 26 of the working tool 52. Further, the constants described later of which the calculation method is not described are stored in these parameter storage units.

The target trajectory Ts includes the trajectory obtained from the CAD data, the trajectory obtained by actually causing the working tool 52 to trace the surface of the workpiece 60 before the machining operation and the trajectory obtained by teaching.

Further, the robot control apparatus 10 includes a command calculation unit 11 for generating/calculating various robot operation commands and supplying them to the robot 50, a command adjusting means 12 for adjusting the target pushing force, the target speed in the proceeding direction, the target trajectory and the control gain in accordance with the force applied by gravity and the dynamic terms to the force measuring means 51 and based on the values of the parameters stored in the first parameter storage unit 20 and supplying the resulting values to the command calculation unit 11, dynamic terms/gravity calculation unit (hereinafter referred to as a "calculation unit") 13 for calculating the dynamic terms and gravity based on the data sent from the position/speed/acceleration detection unit 53 mounted on the robot 50 and the tool mass/gravity point 26 stored in the second parameter storage unit, and a force compensation means 14 for converting the output value of the force measured by the force measuring means 51 such as the force sensor of the robot 50 into a value as viewed from the coordinate system of the force sensor and for compensating the effect of gravity and the dynamic terms thereby to calculate the net force exerted between the working tool 52 and the workpiece 60.

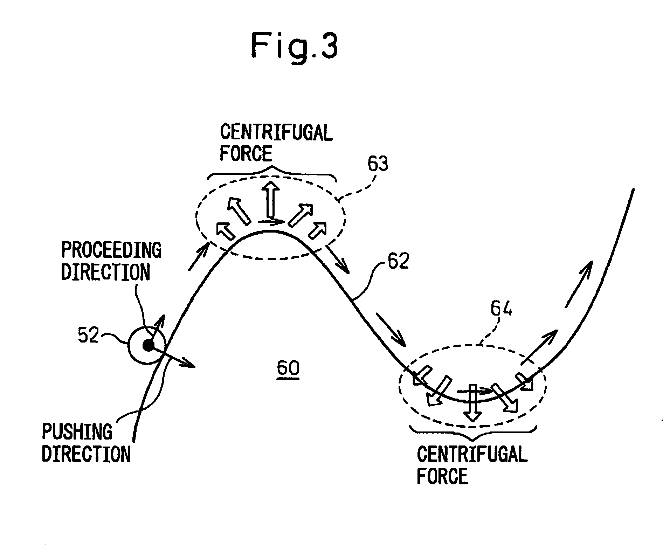

Fig. 3 is a diagram explaining the movement of the forward end portion of the robot arm controlled by the robot control apparatus. Fig. 3 shows the manner in which the working tool 52 of the robot 50 performs the trace machining operation along the surface 62 of the workpiece 60. The surface 62 of the workpiece 60 shown in Fig. 3 has large unevenesses. The direction in which the working tool 52 moves, therefore, is changed to a comparatively great degree in the areas 63 and 64 of the surface 62. In the area 63, the direction in which the component of inertia force in the pushing direction (centrifugal force) works is opposite to the pushing direction, while in the area 64, the direction in which the component of inertia force in the pushing direction (centrifugal force) works is the same as the pushing direction. Incidentally, in Fig. 3, the proceeding direction in which the working tool 52 proceeds is the direction along the surface 62 of the workpiece 60 and the pushing direction in which the workpiece 60 inward thereof in the direction perpendicular to the surface 62 of the workpiece 60 facing the working tool 52.

With reference to Figs. 2 and 3, the control operation performed by the robot control apparatus 10 according to this invention is explained. According to this invention, the force which gravity applies to the force measuring means 51 and the dynamic terms constituting the force which the end effector such as the working tool 52 applies to the force measuring means 51 by driving the robot arm 50a are calculated.

These forces can be calculated by utilizing the well-known method used to solve the dynamic equation of the manipulator expressed as follows:

$$\tau = M(\theta)\frac{d^2\theta}{dt^2} + C\left(\theta, \frac{d\theta}{dt}\right) + G(\theta)$$

where $\tau$ is the joint torque vector, $\theta$ the joint angle vector, $M(\theta)$ the mass matrix, $C(\theta, d\theta/dt)$ the vector indicating the centrifugal force or the Colioris force, and $G(\theta)$ gravity vector.

Gravity and inertia force (including the moment of inertia force) exerted on the gravity center of each link of the robot arm can be calculated by a method such as the Newton-Euler method or the Lagrange Method generally used to solve the dynamic equation described above. Using such a method, inertia force exerted on gravity point of the working tool 52, as viewed from the coordinate system of the force sensor, which acts on the center of the coordinate system of the force sensor is determined from the joint angle vector θ and the speed and acceleration of the joint angle vector θ of the robot arm. In this way, the dynamic terms can be calculated. Also, the force that the weight of the working tool 52 acts on the center of the coordinate system of the force sensor, as viewed from the coordinate system of the force sensor, can be calculated at the same time (in this case, the angular velocity of the robot arm may be calculated from the joint angle vector and the angular acceleration from the joint angle vector or the angular velocity).

In the calculation unit 13 of the robot control apparatus 10, gravity exerted on the center of the coordinate system of the force sensor 51 and the dynamic terms, i.e. the force that the end effector exerts on the center of the coordinate system of the force sensor 51 by moving the robot arm can be calculated in the manner described above.

In the case where the robot arm 50a moves in the manner explained with reference to Fig. 3, on the other hand, the force is measured by the force sensor 51. Then, the force compensation means 14 of the robot control apparatus 10 compensates the effect of the dynamic terms and gravity on the basis of the force thus measured. Specifically, gravity exerted on the center of the coordinate system of the force sensor 51 and the dynamic terms are subtracted from the force measured above. As a result, in the case where the robot arm 50a is operated with the direction of movement of the forward end portion thereof changed to a comparatively great degree, the estimation error of the net force exerted between the working tool 52 and the workpiece 60 can be reduced. As a result, according to this invention, the pushing force exerted between the working tool 52 and the workpiece 60 can be controlled with higher accuracy.

Incidentally, a position/speed/acceleration detection unit (not shown) for the working tool may be mounted on the working tool 52 so as to calculate the dynamic terms and gravity using the acceleration of the working tool 52 detected by the detection unit.

After that, the command adjusting means 12 of the robot control apparatus 10 adjusts the values of the parameters related to the operation command of the robot by comparing the resultant force of gravity and the dynamic terms or only the dynamic terms with a predetermined threshold value. This threshold value is calculated from the target pushing force Fs as shown by Equation (2) below.

$$ht = k0 \cdot Fs \qquad (2)$$

where ht is a threshold value with which to compare the resultant force of gravity and the dynamic terms or the dynamic terms alone, k0 a constant, and Fs a preset target pushing force. In the case where the threshold value ht is determined based on the preset target pushing force Fs in this way, the same adjust value can be used even after replacing the working tool 52, the hand 54 described later or the workpiece 60.

In the description that follows, taking into consideration the component of inertia force in the pushing direction, which includes the centrifugal force, as dynamic terms, the command adjusting means 12 adjusts the values of the parameters related to the operation command of the robot arm by comparing the value of the component in the pushing direction with the threshold value described above (the adjustment may be made alternatively using the force in other than the pushing direction as the dynamic terms).

The following cases of adjusting the parameter values related to the operation command are explained as follows:

(1) Both the target pushing force and the target speed in the proceeding direction are changed;
(2) Only the target speed in the proceeding direction is changed;
(3) Only the target pushing force is changed;
(4) The target trajectory is adjusted; and
(5) The force control gain is adjusted.

(1) The case in which both the target pushing force and the target speed in the proceeding direction are changed

- If the magnitude |h| of the component of inertia force in the pushing direction is smaller than the threshold value ht, the set value Vs is used as the target speed Vd in the proceeding direction.
- If the magnitude |h| of the component of inertia force in the pushing direction is larger than the threshold value ht, on the other hand, both the target speed Vd in the proceeding direction and the target pushing force Fd are reduced (1 - 1), (1 - 2). As a result, the workpiece 60 is prevented from being excessively machined even in the case where the target speed Vd in the proceeding direction is reduced (The target pushing force Fd is increased. However, in the case where it is not desired to reduce the target speed Vd in the proceeding direction greatly at the portion where the workpiece 60 and the working tool 52 are easily separated from each other).

To reduce the target speed Vd in the proceeding direction and the target pushing force Fd, any of the following two methods can be employed.

(1-1) In the case where the magnitude |h| of the component of inertia force in the pushing direction is larger than the threshold value ht, the target speed Vd in the proceeding direction and the target pushing force Fd are changed based on the time t elapsed from the time when the threshold value is exceeded.

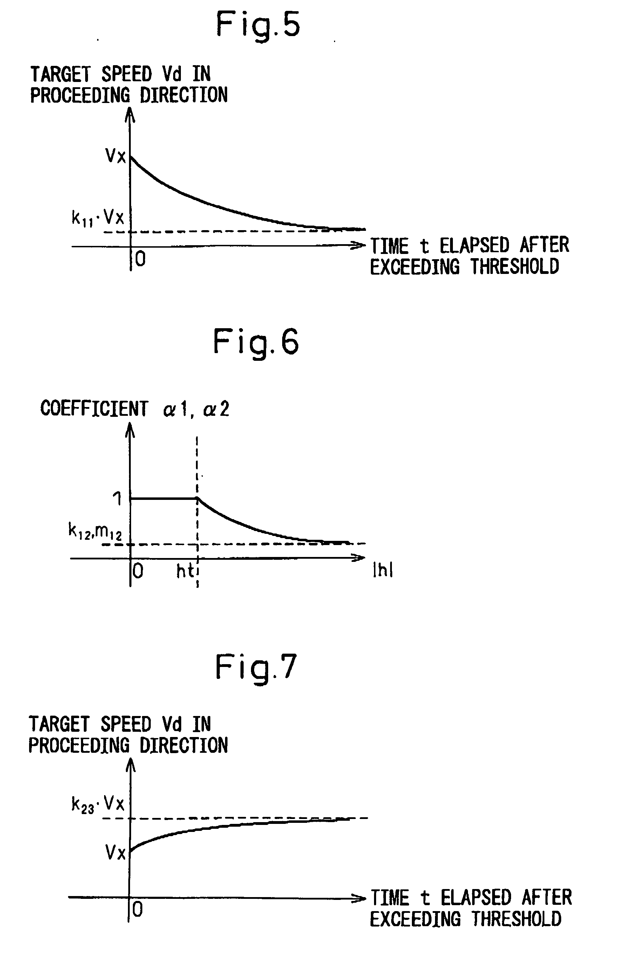

Fig. 5 is a diagram showing the relationship between the target speed Vd in the proceeding direction and the time t elapsed after exceeding the threshold value. In Fig. 5, let Vx be the speed at the time point when the magnitude |h| of the component of inertia force in the pushing direction exceeds the threshold value ht (where Vx is updated to a new value in the case where |h| exceeds, decreases below and then again exceeds the threshold value ht).

the target speed Vd in the proceeding direction is decreased smoothly based on Equation (3) below, while changing the target pushing force Fd downward according to Equation (4).

$$Vd = \{(1 - k_{11}) \cdot exp(-l_{11} \cdot t) + k_{11}\} \cdot Vx \qquad (3)$$

where $0 < l_{11}$, $0 < t$, $0 \leq k_{11} < 1$ and $0 < ht < |h|$.

$$Fd = m_{11} \cdot (Fs/Vs) \cdot Vd + n_{11} \qquad (4)$$

where $0 < m_{11}$.

In Equations (3) and 4), Vd represents the target speed in the proceeding direction, $k_{11}$ a constant, $l_{11}$ a constant, and t the time elapsed after the magnitude |h| of the component of inertia force in the pushing direction exceeds the threshold value ht. Further, Vx represents the speed at the time when the magnitude |h| of the component of inertia force in the pushing direction exceeds the threshold value ht, Fd a target pushing force, $m_{11}$ a constant, Fs a preset target pushing force, and Vs a preset target speed in the proceeding direction. Furthermore, $n_{11}$ represents a constant, h the component of inertia force in the pushing direction, and ht a threshold value for comparing the dynamic terms.

(1-2) In the case where the magnitude |h| of the component of inertia force in the pushing direction is larger than the threshold value ht, the target speed Vd in the proceeding direction and the target pushing force Fd are changed based on the magnitude |h| of the component of inertia force in the pushing direction.

Fig. 6 is a diagram showing the relationship between the coefficients $\alpha 1$, $\alpha 2$ and the magnitude of the component of inertia force in the pushing direction. First, as indicated by Equations (5) and (6) below, the coefficients $\alpha 1$, $\alpha 2$ which are changed according to the magnitude |h| of the component of inertia force in the pushing direction are determined.

$$\alpha 1 = (1 - k_{12}) \cdot exp\{-l_{12} \cdot (|h| - ht)\} + k_{12} \qquad (5)$$

where $0 < l_{12}$, $0 \leq k_{12} < 1$ and $0 < ht < |h|$

$$\alpha 2 = (1 - m_{12}) \cdot exp\{-n_{12} \cdot (|h| - ht)\} + m_{12} \qquad (6)$$

where $0 < n_{12}$, $0 \leq m_{12} < 1$ and $0 < ht < |h|$

Next, using these coefficients $\alpha 1$, $\alpha 2$, the target speed vd in the proceeding direction and the target pushing force Fd are reduced based on Equations (7), (8) shown below.

$$Vd = \alpha 1 \cdot Vs \qquad (7)$$

$$Fd = \alpha 2 \cdot Fs \qquad (8)$$

In Equations (5) and (6), $k_{12}$ is a constant, $l_{12}$ a constant, $m_{12}$ a constant and $n_{22}$ a constant. Incidentally, the target speed Vd in the proceeding direction or the target pushing force, if changed, is preferably changed smoothly so as to not impose an excessive load on the motion of the robot arm.

(2) The case in which only the target speed Vd in the proceeding direction is changed

By adjusting the relative speeds between the working tool 52 and the workpiece 60 as described below, the insufficient or excessive machining operation is prevented.

- If the magnitude |h| of the component of inertia force in the pushing direction is smaller than the threshold value ht, the set value Vs is used as the target speed Vd in the proceeding direction.
- If the magnitude |h| of the component of inertia force in the pushing direction is larger than the threshold value ht and the direction in which the component of inertia force in the pushing direction works is opposite to the pushing direction, the target speed Vd in the proceeding direction is reduced as described below in (2 - 1) and (2 - 2).
- If the magnitude |h| of the component of inertia force in the pushing direction is larger than the threshold value ht and the direction in which the component of inertia force in the pushing direction works is the same as the pushing direction, the target speed Vd in the proceeding direction is increased as described below in (2 - 3) and (2 - 4). Incidentally, the reason why the target speed Vd in the proceeding direction is increased is due to offset the increase in the target speed Vd in the proceeding direction by the increase in the cutting amount per unit time due to the increased pushing force.

The aforementioned matter is explained below.

(2 - 1) In the case where the magnitude |h| of the component of inertia force in the pushing direction is larger than the threshold value ht and the direction in which the component of inertia force in the pushing direction works is opposite to the pushing direction, then the target speed Vd in the proceeding direction is reduced based on the time t elapsed after exceeding the threshold value. In this case, the target speed Vd in the proceeding direction is reduced using Equation (3) described above.

(2-2) in the case where the magnitude |h| of the component of inertia force in the pushing direction is larger than the threshold value ht and the direction in which the component of inertia force in the pushing direction works is opposite to the pushing direction, the target speed Vd in the proceeding direction is reduced based on the magnitude |h| of the component of inertia force in the pushing direction. In this case, after calculating the coefficient $\alpha 1$ from Equation (5) described above, the target speed Vd in the proceeding direction is reduced using Equation (7) described above.

Next, an explanation is made concerning a case in which the magnitude |h| of the component of inertia force in the pushing direction is larger than the threshold value ht and the direction in which the component of inertia force in the pushing direction works is the same as the pushing direction.

Sections (2 - 3) and (2 - 4) contain the description to the effect that the target speed Vd in the proceeding direction is increased. However, an increase in the target speed vd in the proceeding direction, is accompanied by the side effect in which the magnitude |h| of the component of inertia force in the pushing direction is further increased, thereby often deteriorating the control performance. In such a case, like in section (2 - 1) or (2 - 2), the target speed Vd in the proceeding direction is preferably reduced. This is applicable to the grinding work such as the buffing in which the machining amount per unit time is small and hardly affected by the target speed in the proceeding direction.

In an application, such as deburring, in which cutting amount per unit time is large, a reduced target speed Vd in the proceeding direction with a lengthened pushing time inconveniently results in excessive machining.

In the deburring operation or the like, therefore, the target speed Vd in the proceeding direction is increased as described in (2 - 3) or (2 - 4) below. However, in the case where the control performance is extremely deteriorated, the target speed Vd in the proceeding direction and the target pushing force Fd are preferably changed as described in (1 - 1) or (1 - 2).

(2 - 3) In the case where the magnitude |h| of the component of inertia force in the pushing direction is larger than the threshold value ht and the direction in which the component of inertia force in the pushing direction is the same as the pushing direction, then the target speed Vd in the proceeding direction is increased based on the time elapsed after exceeding the threshold value.

Fig. 7 is another diagram showing the relationship between the target speed Vd in the proceeding direction and the time t elapsed after exceeding the threshold value. In Fig. 7, let Vx be the speed at the time point when the magnitude |h| of the component of inertia force in the pushing direction exceeds the threshold value ht (If |h| once exceeds, and then decreases below and exceeds the threshold value ht again, Vx is updated to a new value).

With reference to Fig. 7, the target speed Vd in the proceeding direction is calculated based on Equation (9) shown below.

$$Vd = \{(k_{23} - 1)\cdot(1 - \exp(-l_{23}\cdot t)) + 1\}\cdot Vx \qquad (9)$$

where $0 < l_{23}$, $0 < t$, $1 \leq k_{23}$ and $0 < ht < |h|$, and $k_{23}$ and $l_{23}$ constants.

(2 - 4) In the case where the magnitude $|h|$ of the component of inertia force in the pushing direction is larger than the threshold value ht and the direction in which the component of inertia force in the pushing direction works is the same as the pushing direction, then the target speed Vd in the proceeding direction is increased based on the magnitude lhl of the component of inertia force in the pushing direction.

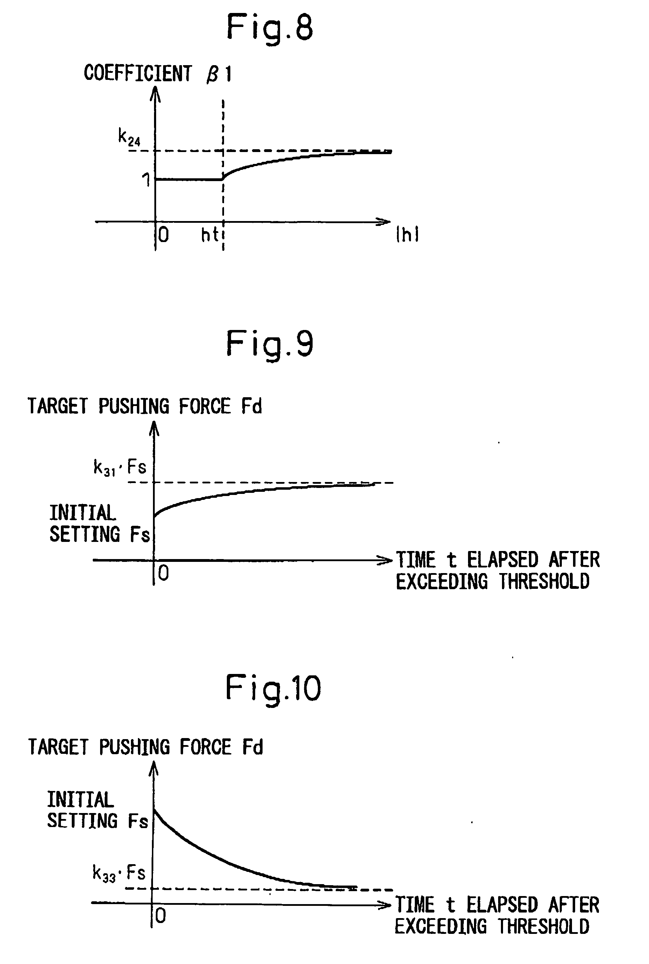

Fig. 8 is a diagram showing the relationship between the coefficient β1 and the magnitude $|h|$ of the component of inertia force in the pushing direction. First, based on Equation (10) below, the coefficient β1 which is changed according to the magnitude $|h|$ of the component of inertia force in the pushing direction is calculated.

$$\beta1 = (k_{24} - 1)\cdot(1 - \exp\{-l_{24}\cdot(|h| - ht)\}) + 1 \qquad (10)$$

where $0 < l_{24}$, $1 \leq k24$ and $0 < ht < |h|$

Next, the target speed Vd in the proceeding direction is calculated from Equation (11) below based on the coefficient β1.

$$Vd = \beta1\cdot Vs \qquad (11)$$

where $k_{24}$ is a constant and $l_{24}$ is also a constant. Incidentally, the target speed Vd in the proceeding direction, if to be changed, is desirably changed smoothly so as to not impose an excessive load on the robot arm motion.

(3) The case in which only the target pushing force is changed

As described below, the insufficient or excessive machining operation is prevented by adjusting the target pushing force Fd.

- If the magnitude $|h|$ of the component of inertia force in the pushing direction is smaller than the threshold value ht, the set value Fs is used as the target pushing force Fd.
- If the magnitude $|h|$ of the component of inertia force in the pushing direction is larger than the threshold value ht and the direction in which the component of inertia force in the pushing direction works is opposite to the pushing direction, the target pushing force Fd is increased as described in (3 - 1) or (3 - 2).
- If the magnitude $|h|$ of the component of inertia force in the pushing direction is larger than the threshold value ht and the direction in which the component of inertia force in the pushing direction works is the same as the pushing direction, the target pushing force Fd is decreased as described in (3 - 3) or (3 - 4).

(3 - 1) In the case where the magnitude $|h|$ of the component of inertia force in the pushing direction is larger than the threshold value ht and the direction in which the component of inertia force in the pushing direction works is opposite to the pushing direction, the target pushing force Fd is increased based on the time t elapsed after exceeding the threshold value.

Fig. 9 is a diagram showing the relationship between the target pushing force Fd and the time t elapsed after exceeding the threshold value. With reference to Fig. 9, the target pushing force Fd is calculated based on Equation (12) shown below.

$$Fd = \{(k_{31} - 1)\cdot(1 - \exp(-l_{31}\cdot t)) + 1\}\cdot Fs \qquad (12)$$

where $0 < l_{31}$, $0 < t$, $1 \leq k_{31}$ and $0 < ht < lhl$, and $k_{31}$ is a constant and so is $l_{31}$.

(3 - 2) In the case where the magnitude $|h|$ of the component of inertia force in the pushing direction is larger than the threshold value ht and the direction in which the component of inertia force in the pushing direction works is opposite to the pushing direction, the target pushing force Fd is increased based on the magnitude $|h|$ of the component of inertia force in the pushing direction. In this case, after calculating the coefficient β1 from Equation (10) described above, the target pushing force Fd is increased using Equation (13) shown below.

$$Fd = \beta1 \cdot Fs \qquad (13)$$

(3 - 3) In the case where the magnitude lhl of the component of inertia force in the pushing direction is larger than the threshold value ht and the direction in which the component of inertia force in the pushing direction works is the same as the pushing direction, the target pushing force Fd is decreased based on the time t elapsed after exceeding the threshold value.

Fig. 10 is another diagram showing the relationship between the target pushing force Fd and the time t elapsed after exceeding the threshold value. With reference to Fig. 10, the target pushing force Fd is calculated according to Equation (14).

$$Fd = \{(1 - k_{33}) \cdot exp(-l_{33} \cdot t) + k_{33}\} \cdot Fs \qquad (14)$$

where $0 < l_{33}$, $0 < t$, $0 \leq k_{33} < 1$ and $0 < ht < |h|$, and $k_{33}$ is a constant and so is $l_{33}$.

(3 - 4) In the case where the magnitude |h| of the component of inertia force in the pushing direction is larger than the threshold value ht and the direction in which the component of inertia force in the pushing direction works is the same as the pushing direction, then the target pushing force Fd is reduced based on the magnitude |h| of the component of inertia force in the pushing direction. In this case, after calculating the coefficient $\alpha1$ from Equation (5) described above, the target pushing force Fd is reduced according to Equation (13). Incidentally, the target pushing force, if changed, is desirably changed smoothly so as to not impose an excessive load on the motion of the robot arm.

Incidentally, as apparent to those skilled in the art, in the case where the target pushing force Fd and the target speed Vd in the proceeding direction are reduced, insufficient or excessive machining on the workpiece can be prevented, while in the case where the target pushing force Fd is increased and/or the target speed Vd in the proceeding direction is reduced, insufficient machining on the workpiece can be prevented. Also, in the case where the target pushing force Fd is reduced and/or the target speed Vd in the proceeding direction is increased, excessive machining on the workpiece is prevented.

The target trajectory Td may be adjusted by the command adjusting means 12 of the robot control apparatus 10. In the description that follows, consider the component of inertia force in the pushing direction, which includes the centrifugal force, as dynamic terms also, and the target trajectory Td is adjusted by comparing the value of this dynamic terms with the threshold value described above (in this case, the adjustment may be made using other than the force in the pushing direction as the dynamic terms).

(4) The case in which target trajectory is adjusted

- If the magnitude lhl of the component of inertia force in the pushing direction is smaller than the threshold value ht, the set value Ts is used as the target trajectory Td.
- If the magnitude |h| of the component of inertia force in the pushing direction is larger than the threshold value ht, on the other hand, the target trajectory is shifted in the manner described below in accordance with the direction in which the component of inertia force in the pushing direction works and the pushing direction.

First, in the case where the direction in which the component of inertia force in the pushing direction works and the pushing direction are opposite to each other, the target trajectory is shifted in the pushing direction.

Second, in the case where the direction in which the component of inertia force in the pushing direction works is the same as the pushing direction, the target trajectory is shifted in the direction opposite to the pushing direction.

Assume that the target trajectory Td is given by the following equation:

$$Td = Ts + Tm$$

The compensation amount Tm of the target trajectory is calculated in the two ways described below in (4 - 1) or (4 - 2).

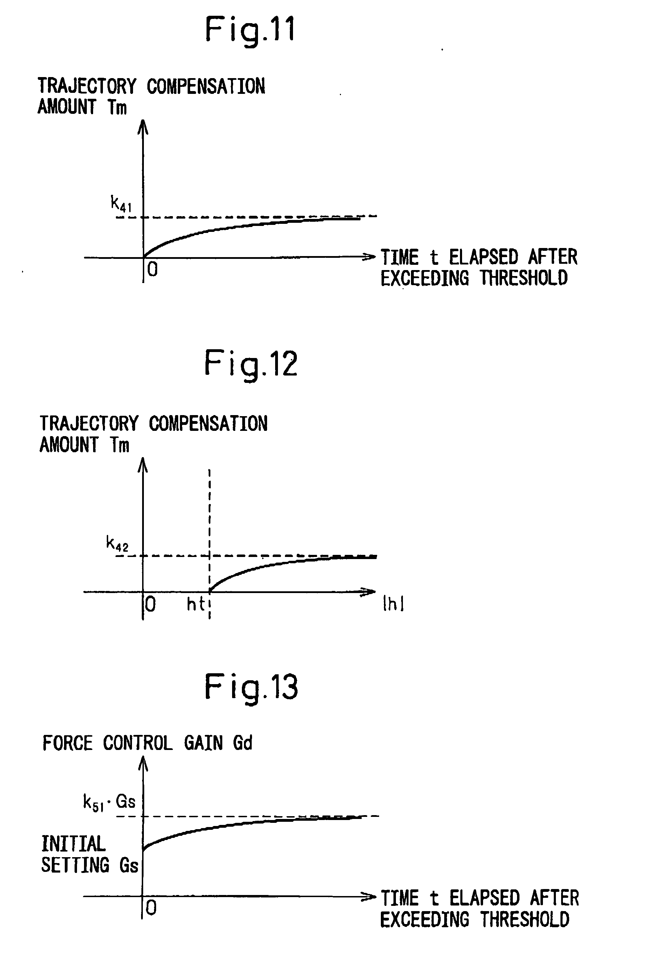

(4 - 1) The compensation amount Tm of the target trajectory is calculated based on the time t elapsed after exceeding the threshold value. Fig. 11 is a diagram showing the relationship between the trajectory compensation amount Tm and the time t elapsed after exceeding the threshold value. With reference to Fig. 11, the compensation amount Tm of the target trajectory is calculated from Equation (15) shown below.

$$Tm = k_{41} \cdot (1 - \exp(-l_{41} \cdot t)) \qquad (15)$$

where $0 < l_{41}$, $0 < t$, $0 \le k_{41}$ and $0 < ht < |h|$ and $k_{41}$ is a constant and so is $l_{41}$.

(4 - 2) The compensation amount Tm of the target trajectory is calculated based on the magnitude |h| of the component of inertia force in the pushing direction. Fig. 12 is another diagram showing the relationship between the trajectory compensation amount Tm and the magnitude |h| of the component of inertia force in the pushing direction. With reference to Fig. 12, the compensation amount Tm of the target trajectory is calculated from Equation (16) shown below.

$$Tm = k_{42} \cdot (1 - \exp\{-l_{42} \cdot (|h| - ht)\}) \qquad (16)$$

where $0 < l_{42}$, $0 \le k_{42}$ and $0 < ht < |h|$ , and $k_{42}$ is a constant and so is $l_{42}$. Further, Tm is the trajectory compensation amount, h the component of inertia force in the pushing direction, and ht the threshold value for comparing the dynamic terms. It will be understood that the insufficient or excessive machining operation to the workpiece is prevented in this way. Incidentally, the target trajectory, if changed, is desirably changed smoothly so as to not impose an excessive load on the motion of the robot arm.

The force acquired by the force measuring means 51 in the trace machining operation is liable to be affected by the surface condition of the workpiece 60, the size of burrs and the displacement or fluctuation of the robot arm 50a due to the motion thereof since the workpiece 60 and the working tool 52 are in contact with each other. Also, there are disturbances such as noises on the signal of the force measuring means 51 and noises caused by the rotational force of the working tool 52 and the vibration of the working tool 52. In the case where the force control gain is set to an excessively large value, the robot arm 50a tends to respond excessively to the disturbances or oscillate. Therefore, the gain is desirably not set to an unnecessarily large value.

Preferably, the magnitude of the control gain is normally set to a comparatively small value, and only in the case where inertia force is comparatively large, the control gain is set to a comparatively large value. In this case, the force control gain may be adjusted by the command adjusting means 12 for adjusting the command on the operation of the robot arm 50a in accordance with the value of the dynamic terms. As a result, the control gain can be increased only in the required area while being normally kept comparatively small. Thus, the workpiece 60 can be machined in the desired state.

Considering the component of inertia force in the pushing direction as dynamic terms, and by comparing this value with the threshold value described above, the force control gain is adjusted (the adjustment may alternatively be made using the force other than in the pushing direction in the dynamic terms). Incidentally, the force control operation carried out by the robot control apparatus 10 may be either the impedance control or the damping control.

(5) The case in which the force control gain is adjusted

- If the magnitude |h| of the component of inertia force in the pushing direction is smaller than the threshold value ht, the set value Gs is used as the force control gain Gd.
- If the magnitude |h| of the component of inertia force in the pushing direction is larger than the threshold value ht, on the other hand, the force control gain Gd is increased as described in (5 - 1) or (5 - 2). (5 - 1) In the case where the magnitude |h| of the component of inertia force in the pushing direction is larger than the threshold value ht, the force control gain Gd is increased based on the time t elapsed after exceeding the threshold value. Fig. 13 is a diagram showing the relationship between the force gain control Gd and the time t elapsed after exceeding the threshold value. With reference to Fig. 13, the force control gain Gd is calculated from Equation (17) shown below.

$$Gd = \{(k_{51} - 1) \cdot (1 - \exp(-l_{51} \cdot t)) + 1\} \cdot Gs \qquad (17)$$

where $0 < l_{51}$, $0 < t$, $l \le k_{51}$ and $0 < ht < |h|$, and $k_{51}$ is a constant and so is $l_{51}$.

(5 - 2) In the case where the magnitude |h| of the component of inertia force in the pushing direction is larger than the threshold value ht, the force control gain Gd is increased based on the magnitude |h| of the component of inertia force in the pushing direction. In this case, after calculating the coefficient β1 from Equation (10) described above, the force control gain Gd is calculated using Equation (18) below.

$$Gd^{\cdot} = \beta1 \cdot Gs \qquad\qquad (18)$$

where Gs is the force control gain preset in the first parameter storage unit 20. Also, in sections (1), (2), (3), (4), (5) above, a table may be prepared and used in which the target speed Vd in the proceeding direction, the target pushing force Fd, the target trajectory compensation amount Tm and the force control gain Gd are set in accordance with the magnitude and direction of the component of inertia force in the pushing direction.

As described above, according to this invention, the commands related to the robot arm operation can be adjusted without teaching the adjust points on the machining route or separately calculating the radius of curvature on the machining route in advance. Also, gravity and the dynamic terms are used to determine whether the machining operation tends to be insufficient or excessive, and in accordance with such a determination, the operation command is adjusted. It should be understood, that the workpiece can be easily and accurately machined.

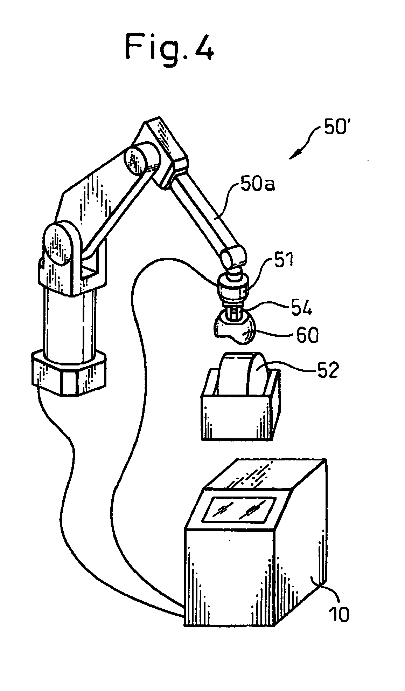

Fig. 4 is a perspective view showing another robot controlled by the robot control apparatus according to this invention. In a robot 50' shown in Fig. 4, a hand 54 for holding a workpiece 60 is mounted at the forward end of a robot arm 50a. The workpiece 60 held by the hand 54 is trace machined while being pushed against a grinder 52 fixed on the floor. A force sensor 51 is arranged between the robot arm 50a and the hand 54. Incidentally, the force may be estimated based on the current value of an actuator for driving the robot arm 50a without using the force sensor 51. Even in such a case, it will be apparent to those skilled in the art that the control operation described above is applicable with equal effect.

The invention has been explained above with reference to typical embodiments thereof. However, for those skilled in the art, it will be understood that the aforementioned modifications and other various modifications, omissions and additions can be made without departing from the scope of the invention.

## Claims

1. A robot control apparatus (10) for controlling force exerted between a working tool (52) mounted at the forward end of a robot arm (50a) and a workpiece (60), comprising:

   a force measuring means (51) for acquiring the force data required for the control operation;
   a calculating means (13) for calculating the force exerted by gravity on the force measuring means (51) and the dynamic terms generated by the motion of the robot arm (50a), of all the forces applied from the working tool (52) to the force measuring means (51);
   a compensating means (14) for compensating the force measured by the force measuring means (51), using the force exerted by gravity on the force measuring means (51) and the dynamic terms calculated by the calculating means (13); and
   a command adjusting means (12) for adjusting the operation command for the robot arm (50a) in accordance with the dynamic terms and the force exerted by gravity on the force measuring means (51) in the case where each of the dynamic terms is larger than a predetermined threshold value.

2. A robot control apparatus (10) for controlling the force exerted between a workpiece (60) held by a hand (54) mounted at the forward end of a robot arm (50a) and a fixed working tool (52), comprising:

   a force measuring means (51) for acquiring the force data required for the control operation;
   a calculating means for calculating the force exerted by gravity on the force measuring means (51) and the dynamic terms generated by the motion of the robot arm (50a), of all the forces applied from the hand (54) holding the workpiece (60) to the force measuring means (51);
   a compensating means (14) for compensating the force measured by the force measuring means (51), using the force exerted by gravity on the force measuring means (51) and the dynamic terms calculated by the calculating means (13); and
   a command adjusting means (12) for adjusting the operation command for the robot arm (50a) in accordance with the dynamic terms and the force exerted by gravity on the force measuring means (51) in the case where each of the dynamic terms is larger than a predetermined threshold value.

3. The robot control apparatus (10) according to claim 1 or 2, wherein the operation command for the robot arm (50a) adjusted by the command adjusting means (12) includes a command on the force to be exerted between the working tool (52) and the workpiece (60).

**4.** The robot control apparatus (10) according to any one of claims 1 to 3, wherein the operation command for the robot arm (50a) adjusted by the command adjusting means (12) includes the speed of the robot arm (50a) in the proceeding direction.

**5.** The robot control apparatus (10) according to any one of claims 1 to 4, wherein the operation command for the robot arm (50a) adjusted by the command adjusting means (12) includes the target trajectory of the robot arm (50a).

**6.** The robot control apparatus (10) according to any one of claims 1 to 5, wherein the operation command for the robot arm (50a) adjusted by the command adjusting means (12) includes the gain of the force control operation.

**7.** The robot control apparatus (10) according to any one of claims 1 to 6, wherein the calculating means (13) calculates the dynamic terms and gravity from the posture, the operation speed and the operation acceleration of the robot arm (50a) and the mass and the center of gravity of the end effector mounted at the forward end of the robot arm (50a).

**8.** The robot control apparatus (10) according to any one of claims 1 to 7, wherein the force measuring means (51) is a force sensor.

**9.** The robot control apparatus (10) according to any one of claims 1 to 7, wherein the force measuring means (51) estimates the force based on the current value of an actuator for driving the robot arm (50a).

**10.** The robot control apparatus (10) according to any one of claims 1 to 9, wherein the force control operation performed by the robot control apparatus (10) is the impedance control operation.

**11.** The robot control apparatus (10) according to any one of claims 1 to 9, wherein the force control operation performed by the robot control apparatus (10) is the damping control operation.

# Fig.1

# Fig.2

# Fig.3

CENTRIFUGAL
FORCE

63

62

PROCEEDING
DIRECTION

52

PUSHING
DIRECTION

64

60

CENTRIFUGAL
FORCE

# Fig.4

# Fig.5

TARGET SPEED Vd IN
PROCEEDING DIRECTION

# Fig.6

COEFFICIENT $\alpha 1$, $\alpha 2$

# Fig.7

TARGET SPEED Vd IN
PROCEEDING DIRECTION

# Fig.8

COEFFICIENT $\beta 1$

# Fig.9

TARGET PUSHING FORCE Fd

# Fig.10

TARGET PUSHING FORCE Fd

# Fig.11

TRAJECTORY COMPENSATION
AMOUNT Tm

$k_{41}$

TIME t ELAPSED AFTER
EXCEEDING THRESHOLD

# Fig.12

TRAJECTORY COMPENSATION
AMOUNT Tm

$k_{42}$

0    ht    $|h|$

# Fig.13

FORCE CONTROL GAIN Gd

$k_{51} \cdot Gs$

INITIAL
SETTING Gs

TIME t ELAPSED AFTER
EXCEEDING THRESHOLD

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3412236 B
- JP 3402829 B
- JP 2739764 B
- JP 5143146 A